# EUROPEAN PATENT APPLICATION

(11) **EP 4 539 219 A1**
(43) Date of publication of application: **16.04.2025**
(21) Application number: 23885933.4
(22) Date of filing: 27.06.2023
(51) Int. Cl.: H01M 50/186, H01M 50/572, H01M 50/178, H01M 4/38, H01M 50/105

(54) **POUCH BATTERY**

(30) Priority: 31.10.2022 KR 20220142856
(71) Applicant: SK On Co., Ltd., Seoul 03161 (KR)
(72) Inventor: YOO, Ga-Yeong, Daejeon 34124 (KR)
(74) Representative: Stolmár & Partner Patentanwälte PartG mbB
(86) International application number: PCT/KR2023/008964
(87) International publication number: WO 2024/096236

(57) **Abstract**

In order to provide a pouch battery having improved lifespan performance, an embodiment of the present disclosure provides a pouch battery comprising: a pouch case including an accommodation part in which an electrode assembly comprising a cathode and an anode is accommodated and a cover part which covers the accommodation part; and the electrode assembly accommodated and sealed in the pouch case, wherein: the pouch battery includes a body part in which the electrode assembly is located and a sealing part where the accommodation part and the cover part are sealed; and a gas storage part and an isolation part which isolates the gas storage part from the body part are included in at least a portion of the sealing part.

## Description

### Technical Field

The present disclosure relates to a pouch battery.

### Background Art

Recently, demand for a high-capacity and high-energy density lithium-ion battery has increased. Accordingly, the use of a silicon-based anode active material as an anode active material for a lithium-ion secondary battery is increasing.

However, the silicon-based anode material has the problem of severe volume expansion, thereby reducing cycle performance. In addition, a pouch-type battery using a pouch battery case may not prevent volume expansion due to an increase in internal pressure, so the volume expansion of the silicon-based anode material is more sensitively revealed to the outside.

Therefore, when using an anode containing a silicon-based anode active material, in designing a pouch-type battery, considering volume expansion of the battery due to the volume expansion of the silicon-based anode active material, in general, a swelling ratio of the pouch case is set to be larger than when using a graphite anode active material, and a forming depth is designed during pouch forming.

Due thereto, a pouch battery, which is initially shipped, is likely to be determined to be defective during a visual inspection due to wrinkles formed in a surface of the pouch case, and also due to the uneven battery surface as described above, measurement errors may occur during battery production, which may increase a defect rate.

Meanwhile, in order to reduce problems such as wrinkle formation, thickness errors, and the like, on the surface of the pouch battery, when the forming depth during pouch forming is designed to be at the same level as when using a graphite anode active material, an increase in a volume of an electrode due to the volume expansion of the silicon anode active material may cause problems such as high pressure inside the pouch battery, which may lead to degraded insulation performance.

### Summary of Invention

### Technical Problem

An embodiment is to reduce a rate of defective determination during a visual inspection in a pouch battery, particularly, a pouch battery including a silicon-based anode active material, and to prevent a problem such as electrode insulation breakage that may occur due to battery swelling during a charging/discharging process.

Another embodiment is to improve a problem that may occur due to volume expansion in a battery including a silicon-based anode active material, and further to improve a problem caused by an error between an initial design value of a forming depth of the pouch case and a value due to the volume expansion during a charging/discharging process.

Another embodiment is to improve the lifespan of a pouch battery, particularly a pouch battery containing a silicon-based anode active material.

### Solution to Problem

According to an aspect of the present disclosure, provided is a pouch battery in which an electrode assembly is accommodated and sealed in a pouch case including an accommodation portion in which the electrode assembly including a cathode and an anode is accommodated and a cover portion covering the accommodation portion, wherein the pouch battery includes a body portion in which the electrode assembly is located and a sealing portion in which the accommodation portion and the cover portion are sealed, and a gas storage portion and an isolation portion isolating the gas storage portion from the body portion are included in at least a portion of the sealing portion.

The gas storage portion and the isolation portion may be formed in a sealing portion from which an electrode tab is drawn out from at least one among four surfaces thereof.

The gas storage portion and the isolation portion may be formed in a sealing portion from which an electrode tab is not drawn out from at least one among the four surfaces thereof.

The gas storage portion and the isolation portion may be formed in sealing portions facing each other centered on the body portion.

The isolation portion may have a weaker sealing strength than the sealing portion.

The sealing portion may be formed on three or four surfaces of an edge of the body portion.

A gas contained in the gas storage portion may be CO₂.

The anode may include a silicon-based active material.

The pouch battery may contain an electrolyte, and the electrolyte may contain CO₂.

In addition, the pouch battery may further include a gas chamber.

### Advantageous Effects of Invention

As set forth above, according to an embodiment, in a pouch battery, in particular, a pouch battery containing a silicon-based anode active material, by forming a pouch according to the shape of an electrode assembly without considering volume expansion of a separate electrode during a pouch forming process, wrinkles may be prevented from being formed on a pouch exterior material, thereby preventing it from being determined to be defective.

According to another embodiment, free space by the isolation portion and the gas storage portion may be secured, so even if a volume of an electrode increases due to volume expansion of an anode active material due to a charging/discharging process, an increase in pressure on the battery may be prevented, thereby preventing a problem such as electrode insulation breakdown from occurring.

According to another embodiment, in a pouch battery, in particular, a pouch battery including a silicon-based anode material, sealing of an isolation portion may be released due to volume expansion of the silicon-based anode active material, and thus a gas stored in a gas storage portion flows into a body portion, thereby inducing the formation of a stable SEI layer of the anode, thereby improving the lifespan of the pouch battery.

Furthermore, since free space may be secured by the gas storage portion, insulation breakage due to the pressure applied to the electrode assembly or electrode due to the volume expansion of the silicon anode material during the charging/discharging process of the battery may be resolved by the free space according to the gas storage portion, and the problem of mismatch with an initial design value during pouch forming may be improved.

### Brief description of drawings

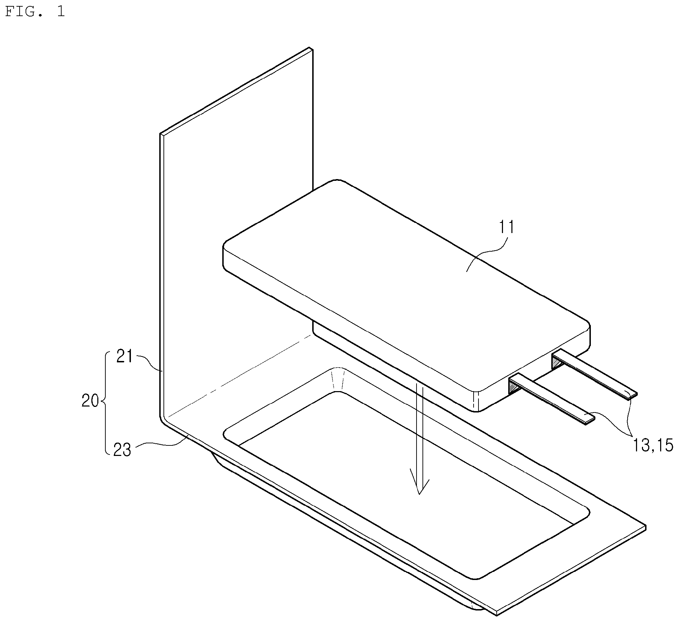

FIG. 1 is a drawing schematically illustrating an exploded perspective view of a typical pouch battery, illustrating an example in which an electrode assembly is stored in a pouch.

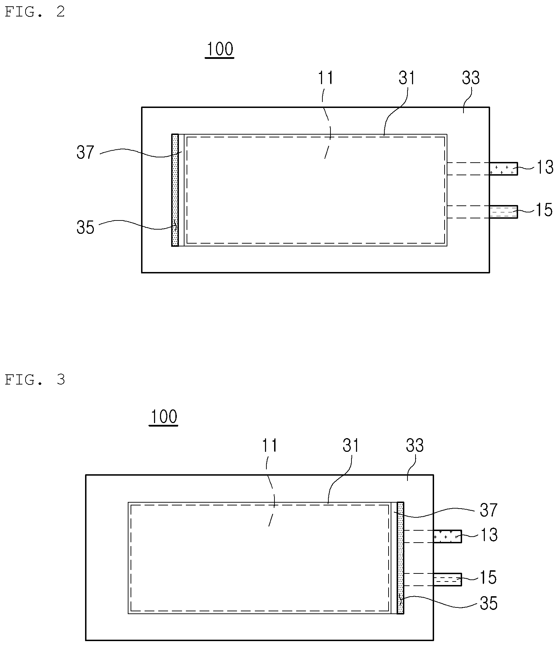

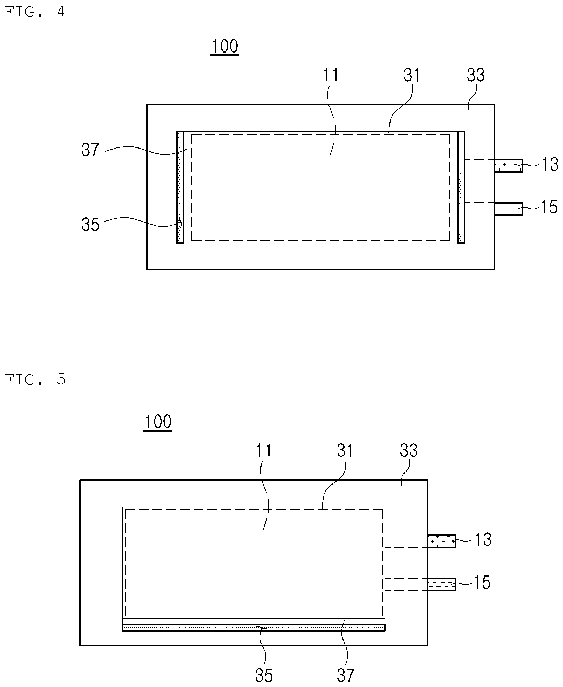

FIGS. 2 to 4 are examples of pouch batteries in which an electrode tab is drawn out in one direction, FIG. 2 illustrates an example in which a gas storage portion is formed on a surface opposite to a surface from which the electrode tab is drawn out, FIG. 3 illustrates an example in which a gas storage portion is formed on the surface from which the electrode tab is drawn out, and FIG. 4 illustrates an example in which a gas storage portion is formed on the surface from which the electrode tab is drawn out and a surface opposite thereto, respectively.

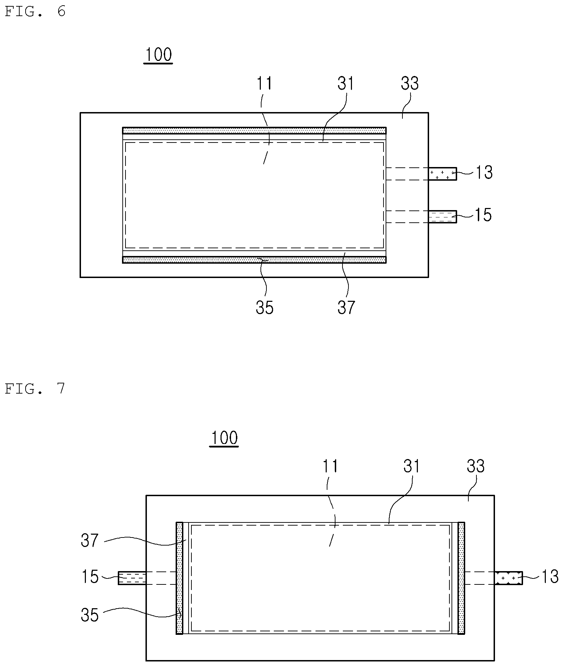

FIGS. 5 and 6 illustrate other examples of pouch batteries in which electrode tabs are drawn out in one direction, and FIGS. 5 and 6 illustrate examples in which a gas storage portion is formed on one or both surfaces of a surface from which an electrode tab is drawn out, respectively.

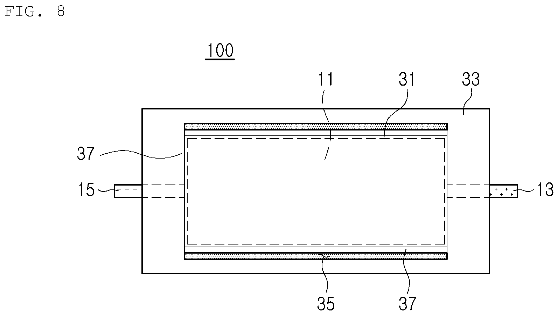

FIGS. 7 and 8 are examples of a pouch battery in which an electrode tab is drawn out in both directions, FIG. 7 illustrates an example in which gas storage portions are formed on both surfaces of a surface from which an electrode tab is drawn out, and FIG. 8 illustrates an example in which gas storage portions are formed on both sides of the surface from which the electrode tabs are drawn out.

### Best Mode for Invention

An embodiment of the present disclosure is to solve a problem in a pouch forming design due to volume expansion of an anode active material in a battery including an anode, particularly, an anode including a silicon-based active material as an anode material, during a charging/discharging process of the battery. Specifically, when a pouch forming depth is designed without considering the volume expansion of the silicon-based anode material, a problem such as insulation breakdown, or the like, of the electrode due to the volume expansion may occur.

Meanwhile, considering the volume expansion of the silicon-based anode material as described above, the forming depth of the pouch is designed to be deep so as to have free space, but, due to this free space, there is a high possibility that defects such as pouch folding, or the like, may occur during an insertion process of the electrode assembly into the pouch case or during a storage or transportation process.

Accordingly, in an embodiment, in order to solve the above-described problem, during a manufacturing process of the battery, the pouch is formed to fit the size of the electrode assembly so that a problem due to free space do not occur, and instead thereof, free space is formed within a pouch battery during the charging/discharging process of the battery. Furthermore, the pouch battery according to an embodiment can improve the lifespan of the battery.

The present disclosure provides a pouch battery including a gas storage portion in a sealing portion of the pouch battery, and embodiments of the present disclosure will be described in more detail below with reference to the accompanying drawings.

According to an embodiment, a pouch battery is configured such that an electrode assembly 11 having a cathode, an anode, and a separator interposed between the cathode and the anode is accommodated in a pouch case 20, filled with an electrolyte and then sealed, as illustrated in FIG. 1. A structure of the electrode assembly 1 is not particularly limited.

For example, the electrode assembly 11 may be a stacked electrode laminate formed by alternately stacking each separator sheet between cathodes and anodes, a stack-and-fold type electrode laminate in which a long rectangular separator is folded in a zigzag shape and a cathode and an anode are alternately inserted to alternately stack the cathode and anodes, a winding-type electrode laminate formed by alternately stacking anodes and cathodes with the separator as a boundary while winding a rectangular separator in one direction, and may be a jelly roll-type electrode laminate formed by winding together in one direction a long rectangular cathode and anode with a separator interposed between the cathode and the anode. Furthermore, the electrode assembly 11 may be formed by combining two or more electrode assemblies 11 of various shapes described above.

A pouch battery 100 may be provided by sealing the pouch case 20 while the electrode assembly 11 is inserted into the pouch case 20. In this case, as illustrated in FIG. 1, the pouch case 20 includes an accommodation portion 21 having a body portion 31 for accommodating the electrode assembly formed to a predetermined depth to accommodate the electrode assembly 11, and a cover portion 23 covering the accommodation portion 21, and is manufactured by housing the electrode assembly 11 in the body portion 31 of the accommodation portion 21, folding the accommodation portion 21 and the cover portion 23 and then heating and pressurizing edges thereof to seal the same.

In this case, the electrode assembly 11 inserted into the pouch case 20 is electrically connected to the outside of the case through an electrode tab in which a cathode non-coated portion and an anode non-coated portion are assembled, and in the pouch battery 100, a portion of an accommodation space in which the electrode assembly 11 is located is called a body portion 31, and a portion in which the accommodation portion 21 and the cover portion 23 is called a sealing portion 33.

Although not illustrated in the drawing, the accommodation portion 21 as well as the cover portion 23 may be formed to a predetermined depth to accommodate the electrode assembly 11 to have a body portion 31.

Therefore, the pouch battery 100 provided in an embodiment is a hexahedron in which each electrode having a rectangular planar shape is laminated, similar to the conventional pouch battery 100 illustrated in FIG. 1. Hereinafter, for convenience, based on the electrode, a surface having a longer length is referred to as a 'long-axis surface', a direction, horizontal to the long-axis surface is referred to as a 'long-axis direction,' a surface having a shorter length is referred to as a 'short-axis surface,' and a direction horizontal to the short-axis surface is referred to as a 'short-axis direction.' In this case, hereinafter, the description is based on an electrode tab being drawn out in a direction of a short-axis surface, but an embodiment thereof is not limited thereto, and an electrode tab may be drawn out in a direction of a long-axis surface.

In the pouch battery 100, the sealing portion 33 may be formed on three surfaces by using the pouch as illustrated in FIG. 1. In the case of using a pouch in which the accommodation portion 21 and the cover portion 23 are separated, a sealing portion 33 may be formed on four sides, but there is no particular limitation.

Furthermore, in the pouch battery 100, as illustrated in FIGS. 1 and 2, electrode tabs 13 and 15 having two polarities may be drawn out in the same direction on one surface of the pouch case 20, for example, on a short-axis surface, in a long-axis direction, and as illustrated in FIG. 7, electrode tabs 13 and 15 having two polarities may be drawn out in opposite directions, respectively, in two directions, for example, in the long-axis direction on both sides of the short-axis direction.

A pouch battery 100 according to an embodiment has a gas storage portion 35 in at least one of the sealing portions 33. The gas storage portion 35 is formed in a portion of the sealing portion 33, a predetermined space is formed between the accommodation portion 21 and the cover portion 23 of the pouch case 20, and a gas is stored inside the space. For example, the gas may be CO₂, and when CO₂ is filled and stored therein, the space may be referred to as a CO₂ storage portion.

The gas storage portion 35 is isolated from a body portion 31 in which an electrode assembly 11 of the pouch case 20 is accommodated. When the gas storage portion 35 is not isolated from the body portion 31, it is substantially the same as providing a free space by forming deeper than the shape of the electrode assembly 11 considering the volume expansion of the pouch battery 100 during the conventional pouch forming, and thus, it may cause a problem of surface defects such as pouch folding, or the like, generated when forming a pouch in consideration of the volume expansion in the conventional case.

To isolate the body portion 31 and the gas storage portion 35, as described above, an isolation portion 35 is included between the body portion 31 and the gas storage portion 35. The isolation portion 37 may be formed by heating and pressurizing the accommodation portion 21 and the cover portion 23 of the pouch to seal the same, and can be performed by the same method as sealing a pouch in general.

The sealing of the isolation portion 37 may be released when pressure due to contraction and expansion is applied to the pouch case 20 during the charging/discharging process of the pouch battery, and in this case, a gas stored in the gas storage portion 35, for example, CO₂, may be supplied inside the battery to induce the formation of a stable Solid electrolyte Interphase (SEI) layer on a surface of the cathode, thereby improving the lifespan of the battery.

Since a sealing area of the isolation portion 37 to the gas storage portion 35 is smaller than a sealing area of the other sealing portion 33, when volume expansion occurs inside the pouch case 20, the sealing in the isolation portion 37 may be released more easily due to the pressure resulting from the volume expansion inside the battery. Furthermore, in order to more reliably ensure the release of the sealing in the isolation portion 37 due to volume expansion inside the pouch case 20, sealing strength of the isolation portion 37 may be formed to be weaker than sealing strength of the sealing portion 33.

The sealing strength of the isolation portion 37 may be set by factors such as a content of a silicon active material included in an anode mixture layer, electrode density, or the like, and is not particularly limited. For example, when the sealing strength of the sealing portion 33 is 100%, the sealing strength of the isolation portion 37 may be 30% or more, for example, 30% to 70%, or 30 to 50%.

More specifically, in a typical pouch battery, the sealing portion 33 may be designed and manufactured to be about 3 to 5 kgf/cm², and the sealing strength of the isolation portion 37 may vary depending on the sealing strength of the sealing portion 33, but may be in the range of 1 to 3.5 kgf/cm², assuming that the sealing strength of the isolation portion 37 is weaker than the sealing strength of the sealing portion 33.

If the sealing strength of the sealing portion 33 is less than 30% of the sealing strength of the isolation portion 37, the sealing may be released simply by applying pressure to the gas storage portion 35 even when there is no change in pressure inside the battery. This release of the sealing may provide free space in the pouch case 20 and cause wrinkle formation in the pouch case 20.

When designing a battery including a silicon-based anode material, various additives such as fluoroethylene carbonate (FEC), vinylene carbonate (VC), or the like, are added to an electrolyte, to improve the lifespan of the battery. When an anode including a silicon-based anode active material is used, CO₂ may form a stable SEI layer on a surface of an anode, thereby improving the cycle performance of the battery. More specifically, CO₂ may contribute to forming a stable SEI layer on the surface of graphite particles included an anode active material.

Therefore, CO₂ may be filled in the gas storage portion 35, located to be spaced apart from the body portion 31, so that the pouch case 20 may be formed according to the size of the electrode assembly 11 during a manufacturing process of the pouch battery 100, thereby resolving the problem of surface defects due to folding of the pouch, or the like. When pressure is applied due to volume expansion of the battery module of the pouch case 20, the gas storage portion 35 may be provided as free space, an increase in the pressure applied to the internal pressure due to the volume expansion may be solved, thereby preventing the problem of electrode insulation breakage.

The gas storage portion 35 may be formed in various shapes and various locations, for example, the gas storage portion 35 may be formed in a sealing portion 33 from which an electrode tab is drawn out or a sealing portion 33 from which the electrode tab is not drawn out, the gas storage portion 35 may be formed in one sealing portion 33 centered on the body portion 31, and may also be formed in each of the sealing portions 33 facing each other, centered on the body portion 31, which will be described in more detail with reference to the drawings below.

A pouch battery 100 according to an embodiment of the present disclosure may be a pouch battery 100 in which both an anode tab 15 and a cathode tab 13 are drawn out on one side surface of the pouch battery 100, that is, in a direction of one short-axis surface thereof, as illustrated in FIGS. 2 to 6, and may be a pouch battery 100 in which the anode tab 15 and the cathode tab 13 are respectively drawn out on both surfaces of the pouch battery 100, that is, in a direction of short-axis surfaces on both sides thereof, as illustrated in FIGS. 7 and 8.

As an example of an embodiment of a pouch battery 100 in which both an anode tab 15 and a cathode tab 13 are drawn out in a direction of one short-axis surface, as illustrated in FIGS. 2 and 3, electrode tabs may be drawn out in a direction of one short-axis surface, a gas storage portion 35 and an isolation portion 37 may be formed in a sealing portion 33 in a direction the opposite short-axis surface, and may be formed in a sealing portion 33 of a short-axis surface from which the electrode tabs are drawn out. According to another embodiment, the gas storage portion 35 and the isolation portion 37 may be formed on both short-axis sealing portions 33 on both sides thereof, as illustrated in FIG. 4.

Furthermore, as another embodiment, the gas storage portion 35 and the isolation portion 37 may be formed in a long-axis sealing portion 33, and as illustrated in FIG. 5, may be formed in a long-axis sealing portion 33 on one side, and as illustrated in FIG. 6, the gas storage portion 35 and the isolation portion 37 may be formed in both long-axis sealing portions 33 on both sides.

Furthermore, although not illustrated in the drawing, the gas storage portion 35 and the isolation portion 37 may be formed together in the sealing portions 33 of the long-axis surface and the short-axis surface, and may be formed in the short-axis sealing portion 33 on one side and long-axis sealing portion 33 on one or more sides thereof, in the long-axis sealing portion 33 on one side and short-axis sealing portion 33 on one or more sides thereof, or in the short-axis sealing portions 33 on both sides and the long-axis sealing portions 33 on both sides thereof.

FIG. 7 illustrates an embodiment of a pouch battery 100 in which an anode tab 15 and a cathode tab 13 are drawn out in short-axis surfaces on both sides of the pouch battery 100, respectively, and as illustrated in FIG. 7, a gas storage portion 35 and an isolation portion 37 may be formed in a short-axis sealing portion 33. Specifically, the gas storage portion 35 and the isolation portion 37 may be formed in the short-axis sealing portion 33 on both sides thereof, and, although not illustrated in the drawing, may be formed in one of the short-axis sealing portions 33.

As another example, FIG. 8 illustrates an embodiment of a pouch battery 100 in which an anode tab 15 and a cathode tab 13 are respectively drawn out in a direction of short-axis surfaces on both sides thereof. As illustrated in FIG. 8, a gas storage portion 35 and an isolation portion 37 may be formed in the long-axis sealing portion 33. Specifically, the gas storage portion 35 and the isolation portion 37 may be formed in long-axis sealing portions 33 on both sides thereof, and although not illustrated in the drawing, the gas storage portion 35 and the isolation portion 37 may be formed in a long-axis sealing portion 33 on one side thereof.

Furthermore, although not illustrated in the drawing, the gas storage portion 35 and the isolation portion 37 may be formed together in the long-axis sealing portion 33 and the short-axis sealing portion 33, and the gas storage portion 35 and the isolation portion 37 may be formed in the short-axis sealing portion 33 on one side thereof and long-axis sealing portion 33 on one or more sides thereof, in the long-axis sealing portion 33 on one side thereof and short-axis sealing portion 33 on one or more sides thereof, or in the short-axis sealing portions 33 on both sides thereof and long-axis sealing portions 33 on both sides thereof.

Meanwhile, an embodiment thereof is not limited thereto, the thickness of the gas storage portion may be approximately 5 to 10 mm.

The pouch battery 100 according to an embodiment of the present disclosure may include a gas chamber, although not illustrated. The gas chamber is provided as a space for capturing a large amount of gas generated inside the pouch battery 100 during a formation process of the pouch battery 100.

The gas chamber may be formed in an extra pouch outside the body portion 31, and may include a gas discharge path through which gas generated in the body portion 31 may move to the body portion 31, and after the formation is terminated, the gas chamber may be removed after the gas discharge path is closed by sealing.

The gas chamber may be formed on the outside of the sealing portion 33 in which the gas storage portion 35 and the isolation portion 37 are not formed, and may be formed on the outside of the gas storage portion 35 and the isolation portion 37.

The pouch battery according to the above-described embodiment of the present disclosure may reduce the problem of appearance defects due to volume expansion of a battery, in particular, folding of a pouch in a pouch battery including a silicon-based anode material, and may improve the problem of electrode insulation breakage and error from an initial design value that may occur due to the volume expansion of the silicon-based anode active material during the charging/discharging process.

### [Description Of Reference Numerals]

100: Pouch Battery
11: Electrode Assembly
13: Cathode Tab
15: Anode Tab
20: Pouch Case
21: Accommodation Portion
23: Cover Portion
31: Body Portion
33: Sealing Portion
35: Gas Storage Portion
37: Isolation Portion

## Claims

1. Provided is a pouch battery in which an electrode assembly is accommodated and sealed in a pouch case including an accommodation portion in which the electrode assembly including a cathode and an anode is accommodated and a cover portion covering the accommodation portion,
wherein the pouch battery includes a body portion in which the electrode assembly is located and a sealing portion in which the accommodation portion and the cover portion are sealed, and
a gas storage portion and an isolation portion, isolating the gas storage portion from the body portion are included in at least a portion of the sealing portion.

2. The pouch battery of claim 1, wherein the gas storage portion and the isolation portion are formed in a sealing portion from which an electrode tab is drawn out from at least one among four surfaces thereof.

3. The pouch battery of claim 1, wherein the gas storage portion and the isolation portion are formed in a sealing portion from which an electrode tab is not drawn out from at least one among the four surfaces thereof.

4. The pouch battery of claim 1, wherein the gas storage portion and the isolation portion are formed in sealing portions facing each other centered on a body portion.

5. The pouch battery of claim 1, wherein the isolation portion has a weaker sealing strength than the sealing portion.

6. The pouch battery of claim 5, wherein the sealing strength of the isolation portion is 1 to 3.5 kgf/cm².

7. The pouch battery of claim 1, wherein the sealing portion is formed on three or four surfaces of an edge of the body portion.

8. The pouch battery of claim 1, wherein a gas contained in the gas storage portion is CO₂.

9. The pouch battery of claim 1, wherein the anode contains a silicon-based active material.

10. The pouch battery of claim 1, wherein the pouch battery contains an electrolyte, and the electrolyte contains CO₂.

11. The pouch battery of one of claims 1 to 10, further comprising:
a gas chamber.
